## Europäisches Patentamt

## European Patent Office

## Office européen des brevets

(19)

(11) Veröffentlichungsnummer: **0 224 787**
**B1**

(12) **EUROPÄISCHE PATENTSCHRIFT**

(45) Veröffentlichungstag der Patentschrift:
**22.02.89**

(21) Anmeldenummer: **86115945.7**

(22) Anmeldetag: **17.11.86**

(51) Int. Cl.⁴: **F16D 65/56**

(54) **Nachstellvorrichtung für Bremsgestänge von Schienenfahrzeugen.**

(30) Priorität: **05.12.85  DE 3543069**

(43) Veröffentlichungstag der Anmeldung:
**10.06.87 Patentblatt 87/24**

(45) Bekanntmachung des Hinweises auf die Patenterteilung:
**22.02.89 Patentblatt 89/8**

(84) Benannte Vertragsstaaten:
**DE FR GB IT SE**

(56) Entgegenhaltungen:
**WO-A-79/00557**
**DE-B- 2 543 930**
**GB-A- 2 026 632**

(73) Patentinhaber: **KNORR-BREMSE AG, Moosacher Strasse 80 Postfach 401060, D-8000 München 40(DE)**

(72) Erfinder: **Staltmeir, Josef, Knorrstrasse 83, D-8000 München 40(DE)**
Erfinder: **Woseglen, Bernd, Angerweg 8, D-8000 München 83(DE)**

ACTORUM AG

## Beschreibung

Die Erfindung betrifft eine einfach wirkende Nachstellvorrichtung für Bremsgestänge von Schienenfahrzeugen, mit einer eine Zuspannkraft auf Bremsorgane abgebenden, undrehbar gehaltenen Gewindespindel, die über ein nichtselbsthemmendes Gewinde mit zwei Muttern verschraubt ist, die beide von einem rohrartigen, durch einen Bremskrafterzeuger bewegbaren Gehäuseteil umgeben sind, wobei
- die erste Mutter entgegen der Zuspannkraftrichtung und in Schließrichtung einer ersten Konuskupplung zwischen ihr und einem Kupplungsteil wirkend durch eine drehbar abgestützte erste Feder belastet ist,
- das Kupplungsteil undrehbar und begrenzt axialverschieblich im Gehäuseteil geführt ist,
- die zweite Mutter entgegen der Zuspannkraftrichtung und in Schließrichtung einer zweiten Konuskupplung zwischen ihr und einem Steuerteil wirkend durch eine drehbar abgestützte zweite Feder entgegen das Steuerteil verspannt ist,
- das rohrartig zwischen die zweite Mutter und das Gehäuseteil eingreifende Steuerteil undrehbar axialverschieblich gegen das Gehäuseteil geführt und in Zuspannkraftrichtung durch einen einen Sollspielabstand aufweisenden Anschlag abfangbar ist,
- ein zweiter Anschlag vorgesehen ist, über den das Steuerteil in seiner gelösten Bremsen entsprechenden Stellung entgegen der Zuspannkraftrichtung abfangbar ist, und wobei
- eine durch Relativbewegungen zwischen dem Gehäuseteil und dem Kupplungsteil betätigbare Klemmvorrichtung vorgesehen ist, die bei Überschreiten einer bestimmten Zuspannkraftschwelle schließt und welche einen zwischen Schulterflächen des Gehäuseteils und des Kupplungsteils eingeordneten Klemmring aufweist.

Eine derartige Nachstellvorrichtung ist aus der PCT-Anmeldung WO 79/557 bekannt. Hierbei ist der Klemmring mittels seiner radialen Seitenflächen zwischen ebenfalls radiale Schulterflächen einklemmbar. Der Klemmring ist mittels einer Axialverzahnung axialverschieblich und undrehbar auf der zweiten Mutter geführt, so daß er im Klemmzustand diese drehfest hält. Die erste Feder ist in Zuspannkraftrichtung gegen das Gehäuseteil abgestützt und zwischen dem Gehäuseteil und dem Kupplungsteil ist eine letzteres in Zuspannkraftrichtung sowie in Öffnungsrichtung der Klemmvorrichtung belastende, weitere Feder eingespannt. Bei der bekannten Nachstellvorrichtung erfährt die zweite Konuskupplung auch bei korrektem Lösehub der Bremsorgane während jeden Bremsvorganges einen Schaltvorgang. Die zweite Feder muß derart bemessen sein, daß sie einerseits die zweite Konuskupplung sicher zu schließen vermag, andererseits aber den elastischen Festbremshub des Bremsgestänges und der Bremsorgane ohne großen Zuspannkraft-Verlust aufzunehmen vermag; diese zweite Feder muß daher relativ lang ausgebildet werden und vergrößert die axiale Baulänge der Nachstellvorrichtung. Die Längsnutverzahnung zwischen dem Klemmring und der zweiten Mutter stellt ein verschleißanfälliges und durch unvermeidliches Spiel geräuschverursachendes Konstruktionsteil dar.

Aus der DE-PS 2 543 930 ist für Nachstellvorrichtungen gattungsfremder Art eine weitere Klemmringanordnung mit ebenfalls radialen Klemmflächen bekannt.

Es ist Aufgabe der Erfindung, eine Nachstellvorrichtung der eingangs angegebenen Art derart auszugestalten, daß sie die Mängel der bekannten Vorrichtungen vermeidet, insbesondere keine unnötigen Schaltvorgänge für Kupplungen erfordert und keine verschleißanfällige und/oder Geräusch verursachende Bauteile aufweist. Die zu schaffende Nachstellvorrichtung soll bei kleinem, erforderlichem Einbauraum eine lange, wartungsfreie Betriebszeit aufweisen.

Diese Aufgabe wird nach der Erfindung dadurch gelöst, daß die Klemmvorrichtung im Klemmzustand das Gehäuseteil mit dem Steuerteil verklemmt und daß der Anschlag ein gegen eine vorgespannte, dritte Feder ausweichbar gehaltenes Anschlagteil aufweist. Während des Festbremshubes wird somit durch die Klemmvorrichtung das Steuerteil vom Gehäuseteil mitgenommen, so daß keine weiteren Kupplungsschaltvorgänge erforderlich sind, und das ausweichbar gehaltene Anschlagteil ist ohne weiteres einbauraumgünstig anordenbar.

Nach der weiteren Erfindung vorteilhafte Ausgestaltungsmöglichkeiten für die Nachstellvorrichtung können den Unteransprüchen entnommen werden.

In der Zeichnung sind Ausführungsbeispiele für nach der Erfindung ausgebildete Nachstellvorrichtungen schematisch dargestellt, und zwar zeigen:

Fig. 1 ein Schnittbild durch eine erste Ausführungsform,
Fig. 2 eine Einzelheit in verkleinertem Maßstab,
Fig. 3 eine geänderte Einzelheit ebenfalls im verkleinertem Maßstab,
Fig. 4 ein Teilschnittbild durch eine geänderte Ausführungsform und
Fig. 5 ein weiteres Teilschnittbild durch eine weitere Ausführungsform, jeweils ebenfalls im verkleinerten Maßstab.

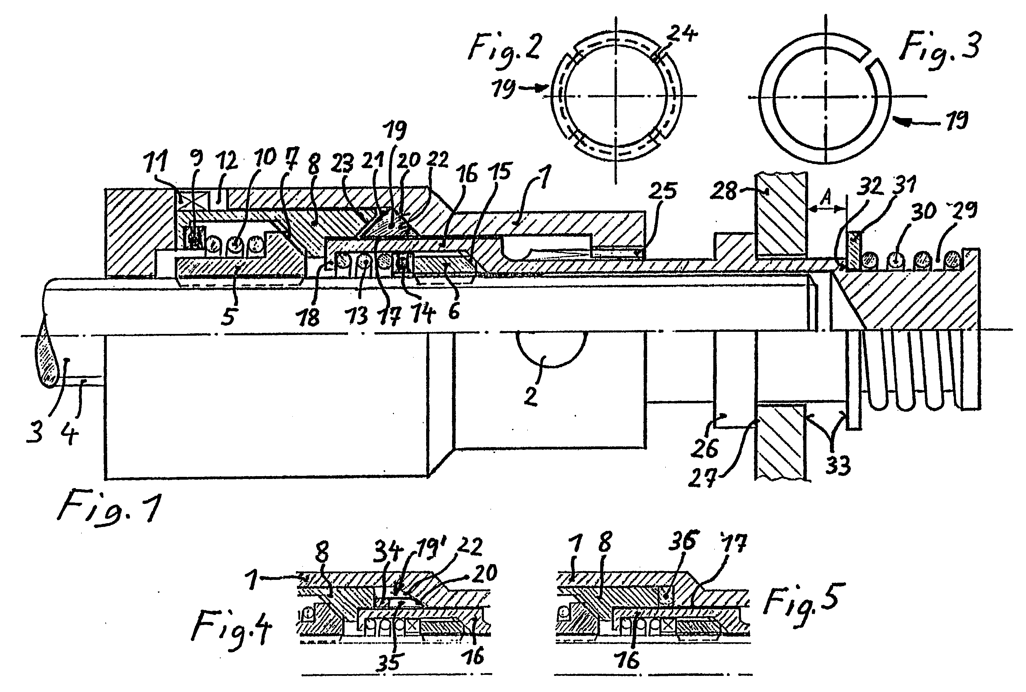

Nach Fig. 1 ist ein Gehäuseteil 1 vorgesehen, das an seinem verjüngten, rechten Endabschnitt mit gleichachsigen, radial auskragenden Bolzen 2 versehen ist, über welche es gegebenenfalls unter Zwischenordnen nichtdargestellter Übersetzungshebel mit einem ebenfalls nichtdargestellten Bremskrafterzeuger koppelbar ist; es ergibt sich hierbei ein aus Bremsklotzeinheiten mit innerer Übersetzung üblicher Aufbau. Abweichend hierzu kann jedoch der Bremskrafterzeuger auch als mit dem Gehäuseteil 1 unmittelbar gekoppelter Kolben ausgebildet sein. Der Bremskrafterzeuger vermag auf das Gehäuseteil 1 eine gemäß Fig. 1 nach links gerichtete Zuspannkraft für nicht dargestellte Bremsorgane auszuüben. In das Gehäuseteil 1 greift eine Gewindespindel 3 ein, die als Druckspindel ausgebildet ist und deren linkes Ende in nichtdargestellter Weise gegebenenfalls über ein weiteres Bremsgestänge mit den bereits erwähnten Bremsorganen verbun-

den ist; über die Anlenkung am Bremsgestänge bzw. den Bremsorganen ist die Gewindespindel 3 undrehbar gehalten. Auf der Gewindespindel 3 sind mittels eines nichtselbsthemmenden Gewindes 4 zwei innerhalb des Gehäuseteiles 1 angeordnete Muttern 5 und 6 verschraubt. Die erste, linke Mutter 5 ist an ihrem rechten Ende mittels einer verzahnten Konuskupplung 7 mit einem Kupplungsteil 8 kuppelbar. Eine gegen die Mutter 5 und über ein Axiallager 9 drehbar gegen das Kupplungsteil 8 abgestützte Feder 10 belastet die Mutter 5 entgegen und das Kupplungsteil 8 in Zuspannkraftrichtung, damit also die Konuskupplung 7 in Schließrichtung; bei geschlossener Konuskupplung 7 ist die Feder 10 abgefangen. Das hülsenartige Kupplungsteil 8 weist wenigstens einen radial auskragenden Gleitstein 11 auf, der in einen Längsschlitz 12 des Gehäuseteiles 1 eingreift, so daß das Kupplungsteil 8 undrehbar und begrenzt axialverschieblich im Gehäuseteil 1 gehalten ist.

Die zweite Mutter 6 ist von einer zweiten Feder 13 über ein Axiallager 14 ebenfalls entgegen der Zuspannkraftrichtung und in Schließrichtung einer zweiten Konuskupplung 15 belastet. Die zweite Konuskupplung 15 ist zwischen die zweite Mutter 6 und ein hülsenartiges, die zweite Mutter 6 umgebendes und in das Gehäuseteil 1 eingreifende Steuerteil 16 eingeordnet. Das Steuerteil 16 weist etwa im Bereich der zweiten Mutter einen im wesentlichen zylindrischen Abschnitt 17 seiner Außenfläche auf. An seinem linken, verschieblich in eine Ausnehmung des Kupplungsteiles 8 eingreifenden Ende ist das Steuerteil 16 mit einer die Feder 13 abstützenden Schulter 18 versehen. Im Bereich des Abschnitts 17 ist das Steuerteil 16 von einem Klemmring umgeben, welcher beiderseits Konusflächen 20 bzw. 21 trägt, welchen entsprechend konische Schulterflächen 22, 23 am Gehäuseteil 1 bzw. am rechten Ende des Kupplungsteiles 8 gegenüberstehen. Der somit als Konusring 19 ausgebildete Klemmring kann gemäß Fig. 2 mehrmals aufgeschnitten sein, so daß er aus mehreren Teilen besteht; eine Wurmfeder 24 oder eine sonstige, geeignete Feder sucht den Konusring 19 radial aufzuweiten. Gemäß Fig. 3 kann abweichend hierzu der Konusring 19 auch als nur einfach aufgeschnittener Federring ausgebildet sein.

Am Durchtritt des Steuerteiles 16 durch die rechte Begrenzungswand des Gehäuseteiles 1 ist zwischen beiden gemäß Fig. 1 eine Axialverzahnung 25 vorgesehen, so daß das Steuerteil 16 undrehbar, aber axialverschieblich zum Gehäuseteil 1 geführt ist. Außerhalb des Gehäuseteil 1 weist das Steuerteil 16 eine Ringschulter 26 auf, welche einen Anschlag 27 zu einem festen Teil 28 bildet; der Anschlag 27 ist bei gelösten Bremsen entsprechender Lage des Steuerteiles 16 geschlossen. Andererseits des Teiles 28 weist das dieses verschieblich durchgreifende Steuerteil 16 eine Eindrehung 29 auf, in welcher sich eine Feder 30 und ein Ringkörper 31 befinden. Der verschieblich auf dem Steuerteil 16 gelagerte Ringkörper 31 wird von der Feder 30 gegen die in Zuspannkraftrichtung liegende, eine Schulter 32 bildende Begrenzung der Eindrehung 29 gedrückt. Der Ringkörper 31 bildet zusammen mit dem Teil 28 einen Anschlag 33, der bei gelösten Bremsen entsprechender Lage des Steuerteiles 16 einen Sollspielabstand A aufweist. Die Feder 30 ist stärker als die Feder 13 dimensioniert.

Bei gelösten Bremsen nehmen die Teile der Nachstellvorrichtung die aus Fig. 1 ersichtlichen Lagen ein. Der Anschlag 27 ist geschlossen und der Anschlag 33 ist mit dem Sollspielabstand A geöffnet. Die Federn 10 und 13 halten die Konuskupplungen 7 und 15 geschlossen. Der Konusring 19 befindet sich mit geringem Spiel zwischen den Schulterflächen 22 und 23, so daß er durch Aufweitung um ein geringes Maß vom Abschnitt 17 der Außenfläche des Steuerteiles 16 abgehoben ist. Das Kupplungsteil 8 liegt dabei in Zuspannkraftrichtung am Gehäuseteil 1 an, so daß sich das erwähnte Spiel nicht vergrößern kann.

Zum Bremsen wird vom Bremskraftmotor auf das Gehäuseteil 1 eine gemäß Fig. 1 nach links gerichtete Zuspannkraft ausgeübt. Nach geringfügiger Verschiebung nach links kuppelt sich das Gehäuseteil 1 über den Konusring 19 mit dem Kupplungsteil 8, so daß dieses und über die geschlossene Konuskupplung 7 sowie die hierdurch drehfest gehaltene Mutter 5 auch die Gewindespindel 3 mitgenommen werden. Die durch die Konuskupplung 15 und damit über das Steuerteil 16 und die Axialverzahnung 25 drehfest gehaltene Mutter 6 wird von der Gewindespindel 3 mitgenommen und nimmt ihrerseits über die Feder 13 das Steuerteil 16 mit. Während des Anlagehubes der Bremse nähert sich somit der Ringkörper 31 dem Teil 28 an.

Bei korrektem Lösespiel der Bremsen schließt sich der Anschlag 33 bzw. legt sich der Ringkörper 31 an das Teil 28 gerade dann an, wenn sich auch die Bremsen anlegen; ein Weiterbewegen der Gewindespindel 3 nach links kann dann nur gegen einen rasch ansteigenden Widerstand erfolgen. Bei Weiterbewegung des Gehäuseteiles 1 erfährt somit der Konusring 19 durch den von der Gewindespindel 3 über die Mutter 5 und die Konuskupplung 7 auf das Kupplungsteil 8 übertragenen Bewegungswiderstand eine rasch anwachsende, axiale Pressung, unter welcher er durch die Wirkung der Konusflächen 20 und 21 radial zusammengepreßt und auf den Abschnitt 17 der Außenfläche des Steuerteiles 16 aufgepreßt wird, der Konusring 19 verklemmt also das Gehäuseteil 1 mit dem Steuerteil 16, so daß letzteres relativ unbeweglich zum Gehäuseteil 1 wird. Bei der Weiterbewegung des Gehäuseteiles 1 wird somit nicht nur die Bremse über den Konusring 19, das Kupplungsteil 8, die Konuskupplung 7, die Mutter 5 und die Gewindespindel 3 unter elastischer Verspannung fest zugespannt, sondern es wird auch bei weiterhin geschlossener Konuskupplung 15 das Steuerteil 16 mitgenommen, während das Teil 28 den Ringkörper 31 unter Kompression der Feder 30 zurückhält. Zum nachfolgenden Lösen der Bremse wird das Gehäuseteil 1 zurückbewegt, wobei sich entsprechend umgekehrte Vorgänge abspielen, bis der Ausgangszustand wieder erreicht ist.

Falls zu Bremsbeginn die Bremse ein zu größes Lösespiel aufweist, schließt sich der Anschlag 33, bevor die Bremse anliegt. Beim Weiterbewegen des Gehäuseteils 1 nach links hält daher das Teil 28 über den Ringkörper 31 und die Feder 30 das Steuerteil 16 zurück, während die Weiterbewegung über den Konusring 19, das Kupplungsteil 8, die Konuskupplung 7 und die Mutter 4 auf die Gewindespindel 3 übertragen wird. Die Mutter 6 wird daher von der Gewindespindel 3 bis zum Lösen der Konuskupplung 15 mitgenommen, woraufhin sich die Mutter 6 unter Durchrutschen bzw. -ratschen der Konuskupplung 15 unter der Kraft der Feder 13 auf der Gewindespindel 3 relativ nach rechts verschraubt. Beim Anlegen der Bremse wächst wiederum der zu überwindende Bewegungswiderstand, wodurch der Konusring 19 unter Axialspannung gerät und radial zum Verklemmen des Steuerteiles 16 zusammengedrückt wird. Beim weiteren, festen Zuspannen der Bremse durch Weiterbewegung des Gehäuseteiles 1 wird somit das Steuerteil 16 mitgenommen, die Axialkupplung 17 ist und bleibt dabei geschlossen.

Beim nachfolgenden Lösen der Bremse bewegt sich das Gehäuseteil 1 nach rechts, wobei sich die Bremse unter Abbau der elastischen Gestängeverspannung bis zum wenigstens nahezu kraftlosen, bloßen Anliegen löst. Gerade zu diesem Zeitpunkt gelangt auch die Schulter 32 wieder zur Anlage am Ringkörper 31. Mit Abklingen der Bremsenzuspannkraft klingt die Axialbelastung für den Konusring 19 ab, so daß dieser sich aufweitet und das Steuerteil 16 wieder freigibt. Bei weiterer Rückbewegung des Gehäuseteils 1 nimmt dieses nach höchstens einem kurzen Schalthub das sich mit seinem linken Ende an ihm anlegende Kupplungsteil 8 mit, wodurch bei weiterhin geschlossener Konuskupplung 7 und damit drehfest gehaltener Mutter 5 durch die Feder 10 und die Mutter 5 die Gewindespindel 3 und von dieser die durch die geschlossene Konuskupplung 15 drehfest gehaltene Mutter 6 und das Steuerteil 16 mitgenommen werden. Der Anschlag 33 öffnet sich dabei. Bei Erreichen des vollen Lösezustandes der Bremse erreicht der Anschlag 33 auch den Sollspielabstand A und der Anschlag 27 schließt sich, wodurch das Steuerteil 16 gegen weitere Verschiebung nach rechts gesperrt wird. Beim Weiterbewegen des Gehäuseteiles 1 nach rechts verschiebt sich dieses daher relativ zum stehenbleibenden Steuerteil 16, letzteres hält zudem über die geschlossene Konuskupplung 15 und die hierdurch drehfeste Mutter auch die Gewindespindel 3 fest. Durch die stehenbleibende Gewindespindel 3 wird die Mutter 5 derart zurückgehalten, daß sich die Konuskupplung 7 bei sich mit dem Gehäuseteil 1 mitbewegendem Kupplungsteil 8 öffnet und sich die Mutter 5 auf der Gewindespindel 3 unter der Kraft der Feder 10 und unter Durchratschen der Konuskupplung 7 relativ nach rechts verschraubt. Dieser Vorgang hält an, bis nach Zurücklegen des anfänglichen Überhubes das Gehäuseteil 1 in seine Vollösestellung gelangt und zur Ruhe kommt. Abschließend schließt die Feder 10 die Konuskupplung 7. Damit ist der Lösezustand mit um den Überhub nach links relativ zum Gehäuseteill 1 verschobener Gewindespindel wieder erreicht, die Bremse weist wieder ihr Sollösespiel auf.

Auch falls während eines Bremsvorganges Verschleiß eintritt, spielen sich beim nachfolgenden Lösen der Bremse entsprechende Vorgänge ab, wobei lediglich nach Erreichen des bloßen Bremsenanliegens die Schulter 32 noch nicht zur Anlage am Ringkörper 31 gelangt ist. Beim Lösen des Konusringes 19 wird das Steuerteil 16 frei und bewegt sich unter der Kraft der Feder 30 nach rechts, bis die Schulter 32 am noch am Teil 28 anliegenden Ringkörper 31 anschlägt; die Mutter 6 folgt bei Durchratschen der Konuskupplung 15 unter der Kraft der Feder 13 durch Verschrauben auf der Gewindespindel 3 dieser Bewegung des Steuerteiles 16, zu Bewegungsabschluß wird die Konuskupplung 15 wieder geschlossen. Der weitere Lösevorgang der Bremse erfolgt wie bereits beschrieben.

In Abänderung zum vorstehend beschriebenen Ausführungsbeispiel kann der Konusring 19 auch hülsenartig ausgebildet sein, wie es in Fig. 4 für den Konusring 19' dargestellt ist. Der Konusring 19' weist einseitig einen geschlossenen Ringkörper 34 auf, der mittels einer radialen Anlagefläche am Kupplungsteil 8 anliegt. Andersseitig ist die Stirnfläche des Konusringes 19' zur Konusfläche 20 ausgebildet, welche an der konischen Schulterfläche 22 des Gehäuseteiles 1 anliegt. Von der Konusfläche 20 her ist der Konusring 19' mit Axialeinschnitten 35 versehen. Im übrigen entspricht der Aufbau der Nachstellvorrichtung nach Fig. 4 derjenigen nach Fig. 1. Der Konusring 19' ist leicht handhab- und montierbar. Infolge der Axialeinschnitte 35 weist der Konusring 19' in diesem Bereich eine hohe, radiale Elastizität auf, so daß dieser Bereich bei Axialkraftbeanspruchungen besonders leicht radial zusammengedrückt werden kann, um so das Steuerteil 16 festzuklemmen. Die Funktionsweise der Nachstellvorrichtung 4 entspricht völlig der zu Fig. 1 beschriebenen Funktionsweise und braucht daher nicht wiederholt zu werden.

Bei den vorstehend beschriebenen Ausführungsformen der Nachstellvorrichtung kann es zweckmäßig sein, den Abschnitt 17 der Außenfläche des Steuerteiles 16 und/oder auch die dieser gegenüberstehende Innenwandung des Konusringes 19 bzw. 19' aufzurauhen oder geringfügig zu verzahnen, wodurch das Festklemmen des Steuerteiles 16 bei Axialbelastungen des Konusringes 19 bzw. 19' erleichtert und verbessert wird.

In weiterer Abänderung ist es gemäß Fig. 5 auch möglich, anstelle des Konusringes 19 oder 19' einen Ringkörper 36 aus gummielastischem Material zwischen gemäß Fig. 5 radiale oder in Abänderung hierzu auch konische Schulterflächen des Gehäuseteiles 1 und des Kupplungsteiles 8 einzuordnen. Bei Axialbelastungen wird der Ringkörper 36 derart verformt, daß sich sein Innendurchmesser verkleinert und er somit gegebenenfalls über aufgerauhte Flächen das Steuerteil 16 fest zuklemmen vermag. Die Funktionsweise der Nachstellvorrichtung nach Fig. 5 entspricht im übrigen völlig der vorbeschriebenen Funktionsweise.

In Abänderung der beschriebenen Ausführungsformen kann anstelle der Axialverzahnung 25 eine andere, drehfeste Längsführung für das Steuerteil 16 vorgesehen sein, beispielsweise kann eine Gleitführung zwischen dem Steuerteil 16 und dem Teil 18 als derartige Längsführung dienen. Bei allen vorstehend beschriebenen Ausführungsformen kann das feste Teil 28 am Fahrzeugrahmen gehalten sein, es kann jedoch auch, wie vielfach bekannt, ein Teil des vom Bremskrafterzeuger zu bewegenden Bremsgestänges sein, wobei bei Einbremsvorgängen das Teil 28 zweckmäßig eine zum Gehäuseteil 1 entgegengesetzte Bewegung erfährt.

Bezugszeichenliste

1 Gehäuseteil
2 Bolzen
3 Gewindespindel
4 Gewinde
5 Mutter
6 Mutter
7 Konuskupplung
8 Kupplungsteil
9 Axiallager
10 Feder
11 Gleitstein
12 Längsschlitz
13 Feder
14 Axiallager
15 Konuskupplung
16 Steuerteil
17 Abschnitt
18 Schulter
19, 19' Konusring
20 Konusfläche
21 Konusfläche
22 Schulterfläche
23 Schulterfläche
24 Wurmfeder
25 Axialverzahnung
26 Ringschulter
27 Anschlag
28 Teil
29 Eindrehung
30 Feder
31 Ringkörper
32 Schulter
33 Anschlag
34 Ringkörper
35 Axialeinschnitt
36 Ringkörper
A Sollspielabstand

**Patentansprüche**

1. Einfach wirkende Nachstellvorrichtung für Bremsgestänge von Schienenfahrzeugen, mit einer eine Zuspannkraft auf Bremsorgane abgebenden, undrehbar gehaltenen Gewindespindel (3), die über ein nichtselbsthemmendes Gewinde (4) mit zwei Muttern (5 und 6) verschraubt ist, die beide von einem rohrartigen, durch einen Bremskrafterzeuger bewegbaren Gehäuseteil (1) umgeben sind, wobei
– die erste Mutter (5) entgegen der Zuspannkraftrichtung und in Schließrichtung einer ersten Konuskupplung (7) zwischen ihr und einem Kupplungsteil (8) wirkend durch eine drehbar abgestützte, erste Feder (10) belastet ist,
– das Kupplungsteil (8) undrehbar und bregrenzt axialverschieblich im Gesäuseteil (1) geführt ist,
– die zweite Mutter (6) entgegen der Zuspannkraftrichtung und in Schließrichtung einer zweiten Konuskupplung (15) zwischen ihr und einem Steuerteil (16) wirkend durch eine drehbar abgestützte, zweite Feder (13) gegen das Steuerteil (16) verspannt ist,
– das rohrartig zwischen die zweite Mutter (6) und das Gehäuseteil (1) eingreifende Steuerteil (16) undrehbar axialverschieblich relativ zum Gehäuseteil (1) geführt und in Zuspannkraftrichtung durch einen einen Sollspielabstand (A) aufweisenden Anschlag (33) abfangbar ist,
– ein zweiter Anschlag (27) vorgesehen ist, über den das Steuerteil (16) in seiner gelösten Bremsen entsprechenden Stellung gegen die Zuspannkraftrichtung abfangbar ist, und wobei
– eine durch Relativbewegungen zwischen dem Gehäuseteil (1) und dem Kupplungsteil (8) betätigbare Klemmvorrichtung vorgesehen ist, die sich bei Überschreiten einer bestimmten Zuspannkraftschwelle schließt und welche einen zwischen Schulterflächen (22) bzw. (23) des Gehäuseteils (1) und des Kupplungsteils (8) eingeordneten Konusring (19) aufweist,
dadurch gekennzeichnet, daß die Klemmvorrichtung im Klemmzustand das Gehäuseteil (1) mit dem Steuerteil (16) verklemmt und daß der Anschlag (33) ein gegen eine vorgespannte, dritte Feder (30) ausweichbar gehaltenes Anschlagteil (31) aufweist.

2. Nachstellvorrichtung nach Anspruch 1, dadurch gekennzeichnet, daß der Klemmring als einen Abschnitt (17) der Außenfläche des Steuerteils (16) umschließender Konusring (19) ausgebildet ist.

3. Nachstellvorrichtung nach Anspruch 2, dadurch gekennzeichnet, daß der gegebenenfalls im Umfangsrichtung geteilt ausgeführte Konusring (19) beidseitige Konusflächen (20, 21) aufweist, denen die entsprechend konisch ausgebildeten Schulterflächen (22, 23) gegenüberstehen.

4. Nachstellvorrichtung nach Anspruch 2 oder 3, dadurch gekennzeichnet, daß der Konusring (19) als einmal aufgeschnittener, sich federnd aufspreizender Federring ausgebildet ist (Fig. 3).

5. Nachstellvorrichtung nach einem der Ansprüche 2 bis 4, dadurch gekennzeichnet, daß der Konusring (19') hülsenartig ausgebildet ist und von einer als Konus (20) ausgebildeten Stirnseite ausgehende Axialeinschnitte (35) aufweist und daß dieser Stirnseite eine konisch ausgebildete Schulterfläche (22) gegenübersteht (Fig. 4).

6. Nachstellvorrichtung nach Anspruch 2, dadurch gekennzeichnet, daß der Klemmring als einen Abschnitt (17) der Außenfläche des Steuerteiles (16) umschließender Ringkörper (36) aus gummielastischem Material ausgebildet ist (Fig. 5).

7. Nachstellvorrichtung nach einem der Ansprüche 2 bis 6, dadurch gekennzeichnet, daß der Abschnitt (17) der Außenfläche des Steuerteils (16) und/oder die diesem Abschnitt gegenüberstehende Fläche des Konusringes (19, 19') bzw. Ringkörpers (35) aufgerauht ausgebildet ist.

8. Nachstellvorrichtung nach einem der Ansprüche 2 bis 5, dadurch gekennzeichnet, daß der Abschnitt (17) der Außenfläche des Steuerteils (16) und/oder die diesem Abschnitt gegenüberstehende Fläche des Konusringes (19, 19') verzahnt ausgebildet ist.

9. Nachstellvorrichtung nach einem oder mehreren der vorstehenden Ansprüche, dadurch gekennzeichnet, daß die erste Feder (10) in Zuspannkraftrichtung gegen das Kupplungsteil (8) abgestützt ist.

10. Nachstellvorrichtung nach einem oder mehreren der vorstehenden Ansprüche, dadurch gekennzeichnet, daß das Anschlagteil als auf dem Steuerteil (16) verschieblicher Ringkörper (31) ausgebildet ist, der von der dritten Feder (30) in Zuspannkraftrichtung gegen eine Schulter (32) des Steuerteils (16) gedrückt wird.

## Revendications

1. Dispositif de rattrapage de jeu à simple effet pour des tringleries de frein de véhicules sur rails, comportant une broche filetée (3) fournissant une force de serrage pour des organes de freinage et montée de façon à ne pas pouvoir tourner, ladite broche filetée portant, à l'aide d'un filetage non-autobloquant (4), deux écrous (5 et 6) qui sont tous deux entourés d'un élément de carter tubulaire (1), susceptible d'être déplacé par un générateur de force de freinage, du type dans lequel
— le premier écrou (5) est chargé, à l'encontre du sens de la force de serrage et dans le sens de la fermeture d'un premier accouplement à cône (7), agissant entre lui-même et un élément d'accouplement (8), par un premier ressort (10) à appui tournant,
— l'élément d'accouplement (8) est guidé dans l'élément de carter (1) sans pouvoir tourner mais à déplacement axial limité,
— le second écrou (6) est chargé, à l'encontre du sens de la force de serrage et dans le sens de la fermeture d'un second accouplement à cône (15) agissant entre lui-même et un élément de commande (16), par un second ressort (13) à appui tournant, contre ledit élément de commande (16),
— l'élément de commande tubulaire (16) qui agit entre le second écrou (6) et l'élément de carter (1) et qui est guidé par rapport à ce dernier sans pouvoir tourner mais à déplacement axial, est susceptible d'être intercepté, dans le sens de la force de serrage, par une butée (33) présentant une distance de jeu de consigne (A),
— une seconde butée (27) est prévue, à l'aide de laquelle l'élément de commande (16) est susceptible d'être intercepté dans sa position qui correspond aux freins desserrés, à l'encontre du sens de la force de serrage, et du type dans lequel
— il est prévu un dispositif de blocage susceptible d'être commandé par des movements relatifs entre l'élément de carter (1) et l'élément d'accouplement (8), ledit dispositif de blocage se fermant au déplacement d'un seuil déterminé de la force de serrage et comportant une bague conique (19) disposée entre des surfaces d'épaulements (22) et (23) de l'élément de carter (1) et de l'élément d'accouplement (8), caractérisé par le fait que le dispositif de blocage, bloque, à l'état de blocage, l'élément de carter (1) avec l'élément de commande (16), et que la butée (33) comporte un élément de butée (31) monté de façon à pouvoir s'effacer par rapport à un troisième ressort préarmé (30).

2. Dispositif de rattrapage de jeu selon la revendication 1, caractérisé par le fait que la bague de blocage est réalisée sous la forme d'une bague conique (19) qui entoure une section (17) de la surface extérieure de l'élément de commande (16).

3. Dispositif de rattrapage de jeu selon la revendication 2, caractérisé par le fait que la bague conique (19), réalisée éventuellement avec une subdivision dans le sens périphérique, comporte, des deux côtés, des surfaces coniques (20, 21) en face desquelles se trouvent les surfaces d'épaulements (22, 23) réalisées avec des conicités correspondantes.

4. Dispositif de rattrapage de jeu selon la revendication 2 ou 3, caractérisé par le fait que la bague conique (19) est réalisée sous la forme d'une bague élastique à coupure unique et susceptible de s'ouvrir élastiquement (Figure 3).

5. Dispositif de rattrapage de jeu selon l'une des revendications 2 à 4, caractérisé par le fait que la bague conique (19') est réalisée à la manière d'une douille et comporte, à partir d'un côté frontal réalisé sous la forme d'un cône (20), des saignées axiales (35), et qu'en face de ce côté frontal se trouve une surface d'épaulement (22) d'allure conique (Figure 4).

6. Dispositif de rattrapage de jeu selon la revendication 1, caractérisé par le fait que la bague de blocage est réalisée sous la forme d'un corps annulaire (36), en un matériau de l'élasticité du caoutchouc, et entourant une section (17) de la surface extérieure de l'élément de commande (16) (Figure 5).

7. Dispositif de rattrapage de jeu selon l'une des revendications 2 à 6, caractérisé par le fait que la section (17) de la surface extérieure de l'élément de commande (16) et/ou la surface de la bague conique (19, 19') ou du corps annulaire (36), située en face de cette section, est rugueuse.

8. Dispositif de rattrapage de jeu selon l'une des revendications 2 à 5, caractérisé par le fait que la section (17) de la surface extérieure de l'élément de commande (16) et/ou la surface de la bague conique (19, 19'), qui se situe en face de cette section, est dentée.

9. Dispositif de rattrapage de jeu selon une ou plusieurs des revendications antérieures, caractérisé par le fait que le premier ressort (10) prend appui, dans le sens de la force de serrage, contre l'élément d'accouplement (8).

10. Dispositif de rattrapage de jeu selon une ou plusieurs des revendications précédentes, caractérisé par le fait que l'élément de butée est réalisé sous la forme d'un corps annulaire (31) qui est susceptible de coulisser sur l'élément de commande (16), lequel corps annulaire est pressé par le troisième ressort (30), dans le sens de la force de serrage, contre un épaulement (32) de l'élément de commande (16).

## Claims

1. Single acting adjusting device for brake rod linkages of rail vehicles which has a threaded spin-

dle (3) held so that it cannot be rotated and which generates a stressing force on brake parts, which threaded spindle is in screwed engagement, by means of a non-locking thread (4), with two nuts (5 and 6) both of which are surrounded by a tubular housing (1) which can be moved by a braking force producer, wherein

– the first nut (5) is loaded, against the direction of the stressing force and in the locking direction of a first conical clutch (7) between the first nut (5) and a clutch member (8), by means of a first spring (10) which is supported so that it can be rotated,

– the clutch member (8) is guided in the housing (1) so that it cannot be rotated and with limited axial movement,

– the second nut (6) is braced, against the direction of the stressing force and in the locking direction of a second conical clutch (15) between the second nut (6) and a control part (16), against the control part (16) by means of a second spring (13) which is supported so that it can be rotated,

– the control part (16) which engages, in the manner of a pipe, between the second nut (6) and the housing (1) is guided so that it cannot be rotated but is movable in an axial direction relative to the housing (1) and can be braced in the direction of the stressing force by means of a stop (33) which has a desired play interval (A),

– a second stop (27) is provided via which the control part (16), in the position when the brakes are disengaged, can be braced against the direction of the stressing force and wherein

– a clamping device is provided which can be operated by means of relative movements between the housing (1) and the clutch member (8), which clamping device locks when a certain stressing threshold is exceeded and has a conical ring (19) arranged between the shoulder surfaces (22) and (23) of the housing (1) and the clutch member (8),

characterised in that the clamping device in the clamped position locks the housing (1) to the control part (16) and in that the stop (33) has a stop part (31) held in such a way that it can be displaced against a pre-tensioned third spring (30).

2. Adjusting device according to claim 1, characterised in that the clamping ring is constructed as a conical ring (19) encircling a section (17) of the outer surface of the control part (16).

3. Adjusting device according to claim 2, characterised in that the conical ring (19) may be divided around its circumference and has on both sides conical surfaces (20, 21), and the shoulder surfaces (22, 23), which are constructed in a corresponding conical shape, are located opposite these conical surfaces (20, 21).

4. Adjusting device according to claim 2 or 3, characterised in that the conical ring (19) is constructed as a resiliently expanding spring ring with a single cut (Fig. 3).

5. Adjusting device according to one of claims 2 to 4, characterised in that the conical ring (19') is constructed as a sleeve and has axial recesses (35) originating in a front face which has the shape of a cone (20) and in that a conical shoulder surface (22) is located opposite this front face (Fig. 4).

6. Adjusting device according to claim 1, characterised in that the clamping ring is constructed from a rubber material as an annular body (36) surrounding a section (17) of the outer surface of the control part (16) (Fig. 5).

7. Adjusting device according to one of claims 2 to 6, characterised in that the section (17) of the outer surface of the control part (16) and/or the surface of the conical ring (19, 19') or annular body (36) located opposite this section is roughened.

8. Adjusting device according to one of claims 2 to 5, characterised in that the section (17) of the outer surface of the control part (16) and/or the surface of the conical ring (19, 19') located opposite to this section is toothed.

9. Adjusting device according to one or more of the preceding claims, characterised in that the first spring (10) is braced in the direction of the clamping force against the clutch member (8).

10. Adjusting device according to one or more of the preceding claims, characterised in that the stop part is constructed as an annular body (31) which can slide on the control part (16) and is pressed by the third spring (30) in the direction of the clamping force against a shoulder (32) of the control part (16).

Fig.1

Fig.2

Fig.3

Fig.4

Fig.5